# EUROPÄISCHE PATENTSCHRIFT

(11) **EP 2 753 521 B1**
(45) Veröffentlichungstag und Bekanntmachung des Hinweises auf die Patenterteilung: **18.11.2015**
(21) Anmeldenummer: 12787352.9
(22) Anmeldetag: 05.09.2012
(51) Int. Cl.: B60T 15/02

(54) **STEUERVENTILDICHTUNGEN UND STEUERVENTILE MIT DER STEUERVENTILDICHTUNG**
CONTROL VALVE SEALS AND CONTROL VALVES WITH THE CONTROL VALVE SEAL
JOINTS DE SOUPAPES DE COMMANDE ET SOUPAPES DE COMMANDE COMPORTANT CE JOINT

(30) Priorität: 06.09.2011 DE 102011112552
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: CZYPIONKA, Simon, 81825 München (DE); PETTER, Thomas, 80336 München (DE); HESSELBARTH, Udo, 81549 München (DE); HELLER, Martin, 85716 Unterschleißheim (DE); SIMON, Timm, 80636 München (DE); KRYLOV, Vladimir, 127322 Moskau (RU); ROMANOV, Sergey, 111558 Moskau (RU)
(86) Internationale Anmeldenummer: PCT/DE2012/100265
(87) Internationale Veröffentlichungsnummer: WO 2013/034147

(56) Entgegenhaltungen:
- EP-A2- 1 520 764
- WO-A1-2012/038285
- WO-A2-2012/038286
- GB-A- 2 402 980
- ASADTSCHENKO V R ED - ASADTSCHENKO V R: "Avtomatitscheskije Tormosa podvishnogo Sostawa sheleznogo Transporta (russ.)", AVTOMATITSCHESKIJE TORMOSA PODVISHNOGO SOSTAWA SHELEZNOGO TRANSPORTA (RUSS.), MOSKAU, MOSKOU, RU, 1. Januar 2002 (2002-01-01), Seiten 71-128, XP002669823, in der Anmeldung erwähnt

## Beschreibung

Die Erfindung betrifft allgemein Fahrzeuge und insbesondere Schienenfahrzeuge. Weiterhin betrifft die Erfindung eine Steuerventildichtung und ein Steuerventil mit der Steuerventildichtung.

Aus dem Fachbuch Asadchenko , 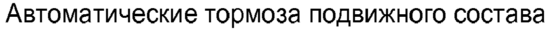 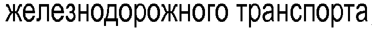 , Moskau 2002, ISBN 5-89035-073-0 ist ein Pneumatisches Steuerventil zum Ansteuern eines Bremszylinders mit einem Bremszylinderdruck basierend auf einem einstellbaren Hauptdruck bekannt. Das Steuerventil umfasst einen Tragekörper mit einer den Hauptluftleitungsdruck führenden Hauptluftleitung, einer den Bremszylinderdruck führenden Bremszylinderdruckleitung und einer einen Steuerdruck führenden Steuerdruckleitung. Ferner umfasst das Steuerventil ein Leitungsteil zum Empfangen des Hauptluftleitungsdruckes aus der Hauptluftleitung und zum Einspeisen des Steuerdruckes in die Steuerdruckleitung. Das Leitungsteil ist am Tragekörper über eine Flanschverbindung gehalten. Schließlich umfasst das Steuerventil ein Hauptteil zum Empfangen des Steuerdruckes aus der Steuerdruckleitung und zum Einspeisen des Bremszylinderdruckes in die Bremszylinderdruckleitung. Auch das Hauptteil ist über eine Flanschverbindung am Tragekörper gehalten.

Es ist Aufgabe der Erfindung, das bekannte Steuerventil zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Regelvorrichtung zum Regeln eines Bremszylinderdruckes in einem Steuerventil:
- ein Gehäuse mit einem Aufnahmeraum, der durch eine ringförmige Trennwand radial in einen inneren Bremszylinderdruckraum und einen äußeren Solldruckraum unterteilt ist,
- ein Trennelement, das den Bremszylinderdruckraum axial vom Solldruckraum trennt, und
- eine Druckquelle, die eingerichtet ist, den Bremszylinderdruckraum in Abhängigkeit einer axialen Lage des Trennelementes mit Druck zu beaufschlagen, so dass der Bremszylinderdruck im Bremszylinderdruckraum einem Solldruck im Solldruckraum gegenübergestellt wird,
- wobei das Trennelement eine axiale Führungswand aufweist, die radial zwischen die ringförmige Trennwand und eine Wand des Gehäuses eingesetzt ist.

Das heißt, dass die Trennwand und die Wand des Gehäuses eine umfänglich verlaufende Nut ausbilden, in der die Führungswand stabil gehalten und geführt ist.

Vorzugsweise ist dabei das Trennelement über die axiale Führungswand an der Wand des Gehäuses geführt.

Der angegebenen Regelvorrichtung liegt die Überlegung zugrunde, dass es schwierig ist, das Trennelement an der Wand des Gehäuses axial zu führen und gleichzeitig eine Dichtung anzubringen, die zwischen den Solldruckraum gegenüber dem Bremszylinderdruckraum pneumatisch abdichtet, da dies entweder eine ungenügende Dichtwirkung oder eine ungenügende Führungswirkung bedingt.

Insofern wird im Rahmen der angegebenen Regelvorrichtung erkannt, dass mit der Trennwand und der radial zwischen die Trennwand und die Wand des Gehäuses eingreifende Führungswand am Trennelement radial zwei verschiedene Flächen zur Verfügung stehen, wobei das Trennelement an einer der beiden radialen Flächen seiner Führungswand axial geführt und an der anderen radialen Fläche seiner Führungswand die beiden Druckräume gegeneinander abgedichtet werden können.

Weiterhin liegt der angegebenen Regelvorrichtung die Überlegung zugrunde, dass die Dichtung der beiden Druckräume gegeneinander radial zwischen der Wand des Gehäuses und der Führungswand vorgesehen werden könnte, so dass da der Bremszylinderdruck zunächst durch einen radialen Spalt zwischen der Trennwand und der Führungswand des Trennelementes durchtunneln müsste bevor er die Dichtung erreicht, die radial auf der anderen Seite der Führungswand angeordnet ist. Dann müsste die axiale Führung jedoch an diesem Spalt zwischen der Trennwand und der Führungswand des Trennelementes angeordnet werden.

Basierend auf dieser Überlegung wird jedoch erkannt, dass die Größe einer radialen Kontaktfläche zwischen der Trennwand und der Führungswand des Trennelementes, die zur axialen Führung des Trennelementes geeignet wäre, abhängig von einer axialen Lage des Trennements in Gehäuse ist, und dass somit die Genauigkeit der axialen Führung des Trennelementes mit einem größer werdenden Bremszylinderdruckraum abnimmt.

Diese Erkenntnis zugrunde gelegt wird im Rahmen der angegebenen Regelvorrichtung vorgeschlagen, die axiale Führung des Trennelements im Gehäuse an die Wand des Gehäuses zu verlegen. In diesem Fall ist die Genauigkeit der axialen Führung des Trennelements von der axialen Lage des Trennelements im Gehäuse unabhängig.

In einer besonderen Weiterbildung der angegebenen Regelvorrichtung ist ein Lagerelement zwischen der Führungswand und der Wand des Gehäuses eingesetzt. Das Lagerelement kann die Führungswand gegenüber der Wand des Gehäuses gleitend lagern oder aber auch wälzlagern. Das heißt, dass das Lagerelement als Wälzelement oder als Gleitelement ausgebildet sein kann. Als Wälzelement können beispielsweise Kugeln oder Rollen verwendet werden, die direkt zwischen der Wand des Gehäuses oder in einem Führungskäfig gehalten sein können.

Zur Gleitlagerung können die Führungswand und die Wand des Gehäuses gleitfördernd beschichtet sein. Es kann aber zusätzlich oder alternativ auch ein spezielles gleitförderndes Lagerelement, wie beispielsweise ein Gleitband zwischen das Gehäuse und die Führungswand eingesetzt werden.

In einer anderen Weiterbildung der angegebenen Regelvorrichtung ist der Bremszylinderdruckraum radial zwischen der Trennwand und der Führungswand gegen den Solldruckraum abgedichtet, so dass die Dichtung der Druckräume wie bereits erwähnt von der Führung des Trennelementes im Gehäuse getrennt ist.

In einer besonderen Weiterbildung umfasst die angegebene Regelvorrichtung einen Dichtring zwischen der Führungswand und der Trennwand zum Abdichten des Bremszylinderdruckraumes gegen den Solldruckraum.

In einer bevorzugten Weiterbildung der angegebenen Regelvorrichtung ist der Dichtring als Nutring mit einer Dichtlippe ausgeführt, die in den Bremszylinderdruckraum gerichtet ist. Auf diese Weise ist die Dichtung als Rückschlagdichtung ausgeführt, deren Dichtwirkung durch einen Druckabfall vom Bremszylinderdruckraum in den Solldruckraum verstärkt wird.

Diese Weiterbildung ist besonders günstig, wenn der pneumatische Druck im Solldruckraum auf einem Umgebungsdruck gehalten wird, wobei der Solldruck durch eine Feder erzeugt wird, auf der das Trennelement im Solldruckraum axial gegengelagert ist, um den Solldruck vorzugeben.

Gemäß einem weiteren Aspekt der Erfindung umfasst ein Hauptteil für ein Steuerventil zum Ansteuern einer pneumatischen Bremse mit einem Bremszylinderdruck:
- eine Vorsteuervorrichtung zum Erfassen einer Druckdifferenz zwischen einem Steuerdruck und einem Referenzdruck, und
- eine angegebene Regelvorrichtung zum Regeln des Bremszylinderdruckes auf einen Solldruck, der von der Druckdifferenz zwischen dem Steuerdruck und dem Referenzdruck abhängig ist.

Gemäß einem weiteren Aspekt der Erfindung umfasst ein Steuerventil zum Ansteuern einer pneumatischen Bremse mit einem Bremszylinderdruck basierend auf einem manuell veränderlichen Hauptleitungsdruck:
- ein Leitungsteil zum Einstellen eines Steuerdruckes basierend auf dem Hauptleitungsdruck, und
- ein angegebenes Hauptteil, zum Einstellen des Bremszylinderdruckes basierend auf dem Steuerdruck.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- Fig. 1: ein vereinfachtes Prinzipdiagramm eines beispielhaften Steuerventils, und
- Fig. 2: eine Regelvorrichtung in einem Hauptteil des Steuerventils der Fig. 1 zeigen.

In den Figuren werden gleiche technische Elemente mit gleichen Bezugszeichen versehen und nur einmal beschrieben.

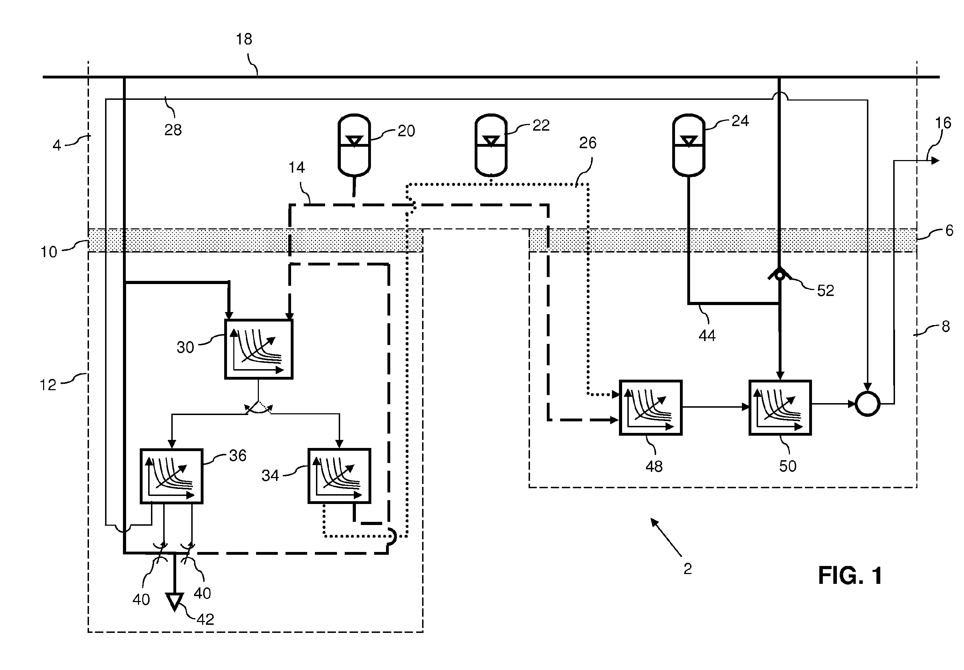

Es wird auf Fig. 1 Bezug genommen, die ein vereinfachtes Prinzipdiagramm eines beispielhaften pneumatisch betätigbaren Steuerventils 2 in einem nicht weiter dargestellten Schienenfahrzeug zum Ansteuern einer nicht weiter dargestellten Bremse des Schienenfahrzeugs zeigt. Es sei an dieser Stelle darauf hingewiesen, dass es eine Vielzahl verschieden funktionierender pneumatisch betätigbarer Steuerventile gibt, und dass der Einsatz der angegebenen Steuerventildichtung nicht auf das nachstehend beschriebene Steuerventil 2 eingeschränkt werden soll.

Ziel des Steuerventils 2 ist gleichzeitig aus einem einzigen von einem Fahrzeugführer des Schienenfahrzeuges vorgegebenen Hauptluftleitungsdruck 18 die Energie als auch die Information zum Betätigen aller Bremsen im oben genannte Schienenfahrzeug abzuleiten.

Das beispielhafte Steuerventil 2 weist dazu einen Tragekörper 4 auf, an dem über eine erste Steuerventildichtung 6 ein Hauptteil 8 und über eine zweite Steuerventildichtung 10 ein Leitungsteil 12 befestigt ist. Um das zuvor genannte Ziel zu verwirklichen, ist das Leitungsteil 12 dazu vorgesehen, basierend auf dem Hauptluftleitungsdruck 18 eine Information über die Betätigung der entsprechenden dem Steuerventil 2 zugeordneten Bremse in Form eines Steuerdruckes 14 abzuleiten. Demgegenüber ist das Hauptteil 8 dazu vorgesehen, unter Verwendung der Energie des Hauptluftleitungsdruckes 18 aus dem Steuerdruck 14 einen Bremszylinderdruck 16 zur Ansteuerung der oben genannten Bremse zu erzeugen. Dieser Ansatz soll nachstehend näher erläutert werden. Zur besseren Unterscheidbarkeit der Drücke ist der Steuerdruck 14 in Fig. 1 mit einer dicken gestrichelten Linie angedeutet, während der Hauptluftleitungsdruck 18 in Fig. 1 mit einer dicken durchgezogenen Linie angedeutet ist.

Der Hauptluftleitungsdruck 18 wird an alle Bremsen des oben genannten Schienenfahrzeuges gleichzeitig angelegt und daher an einer Stelle in den Tragekörper 4 hinein und an einer anderen Stelle aus dem Tragekörper 4 hinaus geführt.

Ein Steuerkammerdruckspeicher 20, ein Referenzspeicher 22 und ein Versorgungsspeicher 24 im Trägerteil 4 sind zur Stabilisierung des Steuerdruckes 14 und anderer Drücke im Steuerventil 2 vorgesehen.

Zur Ableitung der Bremsbetätigungsinformation aus dem Hauptluftleitungsdruck 18 kann das Leitungsteil 12 mit dem Tragekörper 4 über die zweite Steuerventildichtung 10 den Steuerdruck 14, den Hauptluftleitungsdruck 18, einen Referenzdruck 26 und einen Vorsteuerdruck 28 austauschen. In Fig. 1 ist der Referenzdruck 26 zur besseren Erkennbarkeit mit einer dicken gepunkteten Linie dargestellt. Durch die zweite Steuerventildichtung 10 sind somit entsprechend vier pneumatische Kanäle geführt. Im Inneren weist das Leitungsteil 12 eine unter dem Begriff Hauptkolben bekannte Druckvergleichsvorrichtung 30 auf, zum Vergleich des Steuerdruckes 14 und des Hauptluftleitungsdruckes 18 sowie einen Betriebsbremsbeschleuniger 32 zum Nachführen des Steuerdruckes 14 basierend auf dem Hauptluftleitungsdruck 18 im Bremsfall und Füllventile 34 zum Nachführen des Steuerdruckes 14 basierend auf dem Hauptluftleitungsdruck 18 im Bremslösefall auf.

Im Normalbetrieb des oben genannten Schienenfahrzeuges, das heißt, wenn die Bremsen weder angezogen noch gelöst werden, sollen der Steuerdruck 14 und der Hauptleitungsdruck 18 gleich groß sein.

Werden die Bremsen gelöst, erkennt das die Druckvergleichsvorrichtung 30 in einer noch zu beschreibenden Weise daran, dass der Hauptleitungsdruck 18 größer als der Steuerdruck 14 ist, woraufhin die Füllventile 34 aktiviert werden, die daraufhin den Steuerdruck 14 und den Referenzdruck 26 erhöhen und an den Hauptleitungsdruck 18 in einer dem Fachmann bekannten Weise anpassen. Ein entsprechend notwendiger Anschluss des Hauptluftleitungsdruckes 18 an die Füllventile 34 ist in der vorliegenden Ausführung der Übersichtlichkeit halber nicht dargestellt. Gleichzeitig werden der Steuerspeicher 20 und der Referenzspeicher 22 gefüllt. Auf diese Weise wird der oben genannte Zustand des Steuerventils 2 für den Normalbetrieb erreicht.

Werden die Bremsen angezogen, erkennt das die Druckvergleichsvorrichtung 30 in noch zu beschreibenden Weise daran, dass der Hauptluftleitungsdruck 18 kleiner als der Steuerdruck 14 ist, woraufhin der Betriebsbremsbeschleuniger 36 aktiviert wird. Der Betriebsbremsbeschleuniger 36 soll einerseits den Abfall des Hauptluftleitungsdruckes 18 möglichst schnell an vom Fahrzeugführer des Schienenfahrzeuges aus betrachtet nachfolgenden Steuerventilen weiterleiten. Dazu entlüftet der Betriebsbremsbeschleuniger 36 über einen Hahn 40 den Hauptleitungsdruck 18 gegenüber Umgebungsdruck 42. Andererseits soll der Betriebsbremsbeschleuniger 36 den Steuerdruck 14 zum Ansteuern des Hauptteils 8 erzeugen, wozu es den Steuerdruck 14 in der vorliegenden Ausführung über einen weiteren Hahn 40 mit dem Hauptleitungsdruck 18 verbindet, so dass der Steuerdruck 14 dem Hauptleitungsdruck 18 folgt. Dazu öffnet der Betriebsbremsbeschleuniger 36 einen weiteren Hahn 40, der den Steuerdruck 14 mit dem Hauptleitungsdruck 18 verbindet, so dass beide Drücke 14, 18 ausgeglichen werden. Der von den Füllventilen 34 hergestellte Referenzdruck 26 wird demgegenüber von vom Betriebsbremsbeschleuniger 36 nicht verändert. Weiter gibt der Betriebsbremsbeschleuniger 36 noch den Vorsteuerdruck 28 aus, auf dessen Erzeugung der Kürze halber nicht näher eingegangen werden soll.

Somit steckt die aus dem Hauptluftleitungsdruck 18 abgeleitete Bremsbetätigungsinformation für die vom Steuerventil 2 zu betätigende Bremse in einer nicht weiter zu erläuternden Weise in einem Druckunterschied zwischen dem Referenzdruck 26 und dem Steuerdruck 14. Weitere Informationen dazu können dem eingangs genannten Stand der Technik entnommen werden.

Das Hauptteil 8 steuert basierend auf der aus dem Hauptluftleitungsdruck 18 abgeleiteten Bremsbetätigungsinformation die Bremse an. Dazu tauscht das Hauptteil 8 über die erste Steuerventildichtung 6 mit dem Trägerteil 4 den Steuerdruck 14, den Hauptluftleitungsdruck 18, den Referenzdruck 26, den Vorsteuerdruck 28, einen noch zu beschreibenden Versorgungskammerdruck 44 und den Bremszylinderdruck 16 zur Ansteuerung der dem Steuerventil 2 zugeordneten Bremse aus.

Das Hauptteil 8 weist eine weitere Druckvergleichsvorrichtung in Form eines Vorsteuerkreises 48 und einen Bremsdruckregelkreis 50 auf.

Die weitere Druckvergleichsvorrichtung 48 empfängt den Steuerdruck 14 und den Referenzdruck 26 und stellt den oben genannten Druckunterschied zwischen dem Referenzdruck 26 und dem Steuerdruck 14 fest. Dieser Druckunterschied wird durch das Leitungsteil 12 beim Anziehen der Bremse über den Betriebsbremsbeschleuniger 36 vergrößert und beim Lösen der Bremse über die Füllventile 34 verkleinert.

Basierend auf einem nicht näher referenzierten Signal aus der Druckvergleichsvorrichtung 48, das vom zuvor genannten Druckunterschied abhängig ist, erzeugt der Regelkreis 50 unter Zuhilfenahme der Energie aus dem Hauptluftleitungsdruck 18 den Bremszylinderdruck 16. Da der Hauptluftleitungsdruck 18 vom Fahrzeugführer beim Bremsen abgesenkt wird, wird er zur Speicherung der Energie über ein Rückschlagventil 52 im Versorgungsspeicher 24 zwischengespeichert. Somit liegt am Regelkreis 50 ein Versorgungskammerdruck 44 zur Erzeugung des Bremszylinderdruckes 16 an, der nur dann gleich dem Hauptluftleitungsdruck 18 ist, wenn die vom Steuerventil 2 anzusteuernde Bremse nicht betätigt wird.

Zu einer detaillierte Darstellung der Funktionsweise des Regelkreises 50 wird auf den eingangs genannten Stand der Technik verwiesen.

Der Regelkreis 50 erzeugt den Bremszylinderdruck 16 prinzipbedingt mit einer gewissen Totzeit. Zur Verkürzung dieser Totzeit wird auf den Bremszylinderdruck 16 der Vorsteuerdruck 28 in einer dem Fachmann bekannten Weise aufgeschaltet.

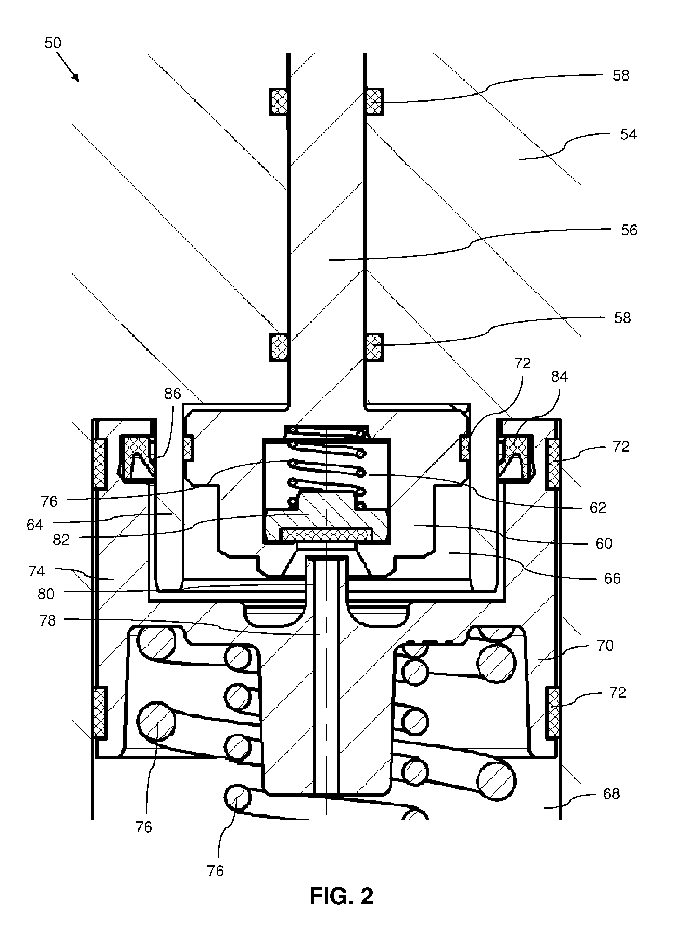

Es wird auf Fig. 2 Bezug genommen, die den Regelkreis 50 in Form einer Regelvorrichtung in dem Hauptteil 8 des Steuerventils 2 der Fig. 1 zeigen.

Der als Regelvorrichtung 50 ausgebildete Regelkreis 50 weist in der vorliegenden Ausführung ein Gehäuse 54 auf, dessen Außenkonturen in Fig. 2 nicht näher dargestellt sind und in dem axial beweglich ein Kolben 56 untergebracht ist. Der Kolben 54 wird in einer nicht weiter dargestellten Weise durch den Vorsteuerkreis 48 basierend auf der Druckdifferenz zwischen dem Steuerdruck 14 und dem Referenzdruck 26 bewegt. Dazu ist der Kolben 56 gleitend in Buchsen 58 gelagert.

Im in die Bildebene hinein betrachteten unteren Ende des Kolbens 56 ist ein Kopf 60 ausgebildet, in dem eine Druckkammer 62 eingeformt ist. Die Druckkammer 62 wird in nicht gezeigter Weise mit dem Versorgungsdruck 44 beaufschlagt und soll daher nachstehend Versorgungsdruckkammer 62 genannt werden. Auf den Kolben 56 wird an späterer Stelle näher eingegangen.

Im Gehäuse 54 ist eine radiale Trennwand 64 ausgebildet, die den Innenraum des Gehäuses 54 radial in einen inneren Raum 66 und einen äußeren Raum 68 trennt. Axial werden die beiden Räume durch ein Trennelement 70 getrennt, das nachstehend als Bremszylinderkolben 70 bezeichnet werden soll. Im radial inneren Raum 66 wird wie nachstehend näher erläutert der Bremszylinderdruck 16 aufgebaut, so dass der radial innere Raum 66 nachstehend als Bremszylinderdruckraum 66 bezeichnet werden soll. Ein Auslass aus dem Bremszylinderdruckraum 66 zur anzusteuernden Bremse ist in Fig. 2 der Übersichtlichkeit halber nicht dargestellt. Im radial äußeren Druckraum 68 wird ein in Fig. 1 nicht weiter dargestellter Solldruck aufgebaut, der dem Bremszylinderdruck 16 zur Regelung gegenübergestellt wird, worauf an späterer Stelle näher eingegangen wird. Daher wird der radial äußere Druckraum 68 nachstehend als Solldruckraum 68 bezeichnet.

Der Kopf 60 des Kolbens 56 ist im Bremszylinderdruckraum 66 axial über ein Gleitband 72 geführt. Auf diese Weise wird der Kolben 56 über die beiden Buchsen 58 und das Gleitband 72 axial im Gehäuse geführt.

Der Bremszylinderkolben 70 weist eine nicht näher referenzierte axiale Platte auf, an deren radialer Außenseite sich eine Führungswand 74 in Form eines Hohlzylinders anschließt. An einer radialen Außenseite der Führungswand 74 sind zwei Gleitbänder 72 zur axialen Führung des Bremszylinderkolbens 70 im Gehäuse 56 abgeordnet. Der Bremszylinderkolben 72 ist ferner über zwei Federn 76 im Gehäuse 54 abgestützt, die den Bremszylinderkolben 72 axial gegen den Kopf 60 des Kolbens 56 drücken. Das heißt, dass der Vorsteuerkreis 48 in der oben genannten Weise den Kolben 54 und damit den Bremszylinderkolben 70 axial gegen die Federn 76 schiebt. Diese werden so mit einem bestimmten Hub zusammengedrückt und bringen so aufgrund ihrer Federkonstanten einen vom Hub abhängigen Solldruck entgegen der Verschiebungsrichtung auf, so dass mit der Verschiebung aus dem Vorsteuerkreis 48 indirekt der Solldruck für den Regelkreis 50 vorgegeben ist.

Mittig durch den Bremszylinderkolben 70 ist ein Entlüftungskanal 78 geführt, der durch einen mittig auf dem Bremszylinderkolben 70 in Richtung des Kopfes 60 Kolbens 56 ausgebildeten Vorsprung 80 geführt ist. Die Versorgungsdruckkammer 62 ist wiederum mit einem in die Versorgungsdruckkammer 62 hinein bewegbaren und über eine Feder 76 abgestützten Deckel 82 verschlossen. Wird der Kopf 60 des Kolbens 56 daher durch den Vorsteuerkreis 48 gegen den Bremszylinderkolben 70 gedrückt, so öffnet der Vorsprung 80 den Deckel 82 und der Versorgungsdruck 44 wird an den Bremszylinderdruckraum 66 angelegt. Mit dem Versorgungsdruck 44 wird der Bremszylinderkolben 70 axial gegen die Federn 76 gedrückt, so dass der Bremszylinderdruckraum 66 expandiert. Ab einer bestimmten Größe des Bremszylinderdruckraumes 66, wenn der Bremszylinderdruck 16 zu groß wird, verlässt der Deckel 82 den Vorsprung 80 und der Bremszylinderdruckraum 66 wird über den Entlüftungskanal 78 entlüftet. Auf diese Weise wird der Bremszylinderdruck 16 auf den Solldruck eingeregelt, der durch die Federn 76 und indirekt durch den Vorsteuerkreis 48 vorgegeben wird.

Der Bremszylinderdruckraum 66 baut daher gegenüber dem Solldruckraum 68 einen vergleichsweise hohen pneumatischen Druck auf, der in der vorliegenden Ausführung über einen Nutring 84 mit einer Dichtlippe 86 abgedichtet wird, die in den Bremszylinderdruckraum 66 gerichtet ist. Auf diese Weise wirkt der Bremszylinderdruck 16 auf die Dichtlippe 86 und unterstützt die Dichtwirkung.

Zwar könnte der Nutring 84 auch zwischen dem Gehäuse 70 und der radialen äußeren Seite der Führungswand 74 des Bremszylinderkolbens 70 angeordnet sein, was die Dichtwirkung aufgrund des geringeren, beim Nutring 84 anliegenden pneumatischen Drucks steigern würde, dann müsste aber die Gleitlagerung durch die Gleitbänder in den radialen Spalt zwischen der Führungswand 74 des Bremszylinderkolbens 70 und der Trennwand 64 am Gehäuse 54 angeordnet werden, was jedoch die Führungsgenauigkeit beeinflussen würde, weil hier die Führungsfläche im radialen Spalt abhängig von der axialen Lage des Bremszylinderkolbens 70 gegenüber der Trennwand 64 wäre.

## Patentansprüche

1. Regelvorrichtung (50) zum Regeln eines Bremszylinderdruckes (16) in einem Steuerventil (2), umfassend:
- ein Gehäuse (54) mit einem Aufnahmeraum, der durch eine ringförmige Trennwand (64) radial in einen inneren Bremszylinderdruckraum (66) und einen äußeren Solldruckraum (68) unterteilt ist,
- ein Trennelement (70), das den Bremszylinderdruckraum (66) axial vom Solldruckraum (68) trennt, und
- eine Druckquelle (24), die eingerichtet ist, den Bremszylinderdruckraum (66) in Abhängigkeit einer axialen Lage des Trennelementes (70) mit Druck (44) zu beaufschlagen, so dass der Bremszylinderdruck (16) im Bremszylinderdruckraum (66) einem Solldruck im Solldruckraum (68) gegenübergestellt wird,
- wobei das Trennelement (70) eine axiale Führungswand (74) aufweist, die radial zwischen die ringförmige Trennwand (64) und eine Wand des Gehäuses (54) eingesetzt ist.

2. Regelvorrichtung (50) nach Anspruch 1, wobei das Trennelement (70) über die axiale Führungswand (74) an der Wand des Gehäuses (54) geführt ist.

3. Regelvorrichtung (50) nach Anspruch 1 oder 2, umfassend ein Lagerelement (72) zwischen der Führungswand (74) und der Wand des Gehäuses (54).

4. Regelvorrichtung (50) nach Anspruch 3, wobei das Lagerelement (72) ein Gleitband ist.

5. Regelvorrichtung (50) nach einem der vorstehenden Ansprüche, wobei der Bremszylinderdruckraum (66) radial zwischen der Trennwand (64) und der Führungswand (74) gegen den Solldruckraum (68) abgedichtet ist.

6. Regelvorrichtung (50) nach Anspruch 5, umfassend einen Dichtring (84) zwischen der Führungswand (74) und der Trennwand (64) zum Abdichten des Bremszylinderdruckraumes (66) gegen den Solldruckraum (68).

7. Regelvorrichtung (50) nach Anspruch 6, wobei der Dichtring (84) als Nutring mit einer Dichtlippe (86) ausgeführt ist, die in den Bremszylinderdruckraum (66) gerichtet ist.

8. Regelvorrichtung (50) nach einem der vorstehenden Ansprüche, umfassend eine Feder (76), auf der das Trennelement (70) im Solldruckraum (68) axial gegengelagert ist, um den Solldruck vorzugeben.

9. Hauptteil (8) für ein Steuerventil (2) zum Ansteuern einer pneumatischen Bremse mit einem Bremszylinderdruck (16), umfassend:
- eine Vorsteuervorrichtung (48) zum Erfassen einer Druckdifferenz zwischen einem Steuerdruck (14) und einem Referenzdruck (26), und
- eine Regelvorrichtung (50) nach einem der vorstehenden Ansprüche zum Regeln des Bremszylinderdruckes (16) auf einen Solldruck, der von der Druckdifferenz zwischen dem Steuerdruck (14) und dem Referenzdruck (26) abhängig ist.

10. Steuerventil (2) zum Ansteuern einer pneumatischen Bremse mit einem Bremszylinderdruck (16) basierend auf einem manuell veränderlichen Hauptleitungsdruck (18), umfassend:
- ein Leitungsteil (12) zum Einstellen eines Steuerdruckes (14) basierend auf dem Hauptleitungsdruck (18), und
- ein Hauptteil (8) nach Anspruch 9, zum Einstellen des Bremszylinderdruckes (16) basierend auf dem Steuerdruck (14).

## Claims

1. A regulating apparatus (50) for regulating a brake cylinder pressure (16) in a control valve (2), comprising:
- a housing (54) with a receiving space which is divided radially by an annular dividing wall (64) into an inner brake cylinder pressure space (66) and an outer setpoint pressure space (68),
- a separating element (70) which separates the brake cylinder pressure space (66) axially from the setpoint pressure space (68), and
- a pressure source (24) which is set up to load the brake cylinder pressure space (66) with pressure (44) as a function of an axial position of the separating element (70), with the result that the brake cylinder pressure (16) in the brake cylinder pressure space (66) is compared with a setpoint pressure in the setpoint pressure space (68),
- the separating element (70) having an axial guide wall (74) which is inserted radially between the annular dividing wall (64) and a wall of the housing (54).

2. The regulating apparatus (50) as claimed in claim 1, the separating element (70) being guided via the axial guide wall (74) on the wall of the housing (54).

3. The regulating apparatus (50) as claimed in claim 1 or 2, comprising a bearing element (72) between the guide wall (74) and the wall of the housing (54).

4. The regulating apparatus (50) as claimed in claim 3, the bearing element (72) being a slip band.

5. The regulating apparatus (50) as claimed in one of the preceding claims, the brake cylinder pressure space (66) being sealed radially between the dividing wall (64) and the guide wall (74) with respect to the setpoint pressure space (68).

6. The regulating apparatus (50) as claimed in claim 5, comprising a sealing ring (84) between the guide wall (74) and the dividing wall (64) for sealing the brake cylinder pressure space (66) with respect to the setpoint pressure space (68).

7. The regulating apparatus (50) as claimed in claim 6, the sealing ring (84) being configured as a grooved ring with a sealing lip (86) which is directed into the brake cylinder pressure space (66).

8. The regulating apparatus (50) as claimed in one of the preceding claims, comprising a spring (76), against which the separating element (70) abuts axially in the setpoint pressure space (68), in order to specify the setpoint pressure.

9. A main part (8) for a control valve (2) for actuating a pneumatic brake with a brake cylinder pressure (16), comprising:
- a pilot control apparatus (48) for detecting a pressure difference between a control pressure (14) and a reference pressure (26), and
- a regulating apparatus (50) as claimed in one of the preceding claims for regulating the brake cylinder pressure (16) to a setpoint pressure which is dependent on the pressure difference between the control pressure (14) and the reference pressure (26).

10. A control valve (2) for actuating a pneumatic brake with a brake cylinder pressure (16) based on a manually variable main line pressure (18), comprising:
- a line part (12) for setting a control pressure (14) based on the main line pressure (18), and
- a main part (8) as claimed in claim 9, for setting the brake cylinder pressure (16) based on the control pressure (14).

## Revendications

1. Dispositif (50) de réglage d'une pression (16) de cylindre de frein dans une soupape (2) de commande, comprenant :
- un boîtier (54) ayant un espace de réception, qui est subdivisé par une cloison (64) annulaire radialement en un espace (66) intérieur de pression de cylindre de frein et en un espace (68) extérieur de pression de consigne,
- un élément (70) de séparation, qui sépare l'espace (66) de pression de cylindre de frein axialement de l'espace (68) de pression de consigne et
- une source (24) de pression, qui est conçue pour alimenter en pression (44) l'espace (66) de pression de cylindre de frein en fonction d'une position axiale de l'élément (70) de séparation, de manière à ce que la pression (16) de cylindre de frein dans l'espace (66) de pression de cylindre de frein soit opposée à une pression de consigne dans l'espace (68) de pression de consigne,
- l'élément (70) de séparation ayant une paroi (74) axiale de guidage, qui est insérée radialement entre la cloison (64) annulaire et une cloison du boîtier (54).

2. Dispositif (50) de réglage suivant la revendication 1, dans lequel l'élément (70) de séparation est guidé sur la paroi du boîtier (54) par la paroi (74) axiale de guidage.

3. Dispositif (50) de réglage suivant la revendication 1 ou 2, comprenant un élément (72) de palier entre la paroi (74) de guidage et la paroi du boîtier (54).

4. Dispositif (50) de réglage suivant la revendication 3, dans lequel l'élément (72) de palier est une bande de glissement.

5. Dispositif (50) de réglage suivant l'une des revendications précédentes, dans lequel l'espace (66) de pression de cylindre de frein est rendu étanche vis-à-vis de l'espace (68) de pression de consigne radialement entre la cloison (64) et la paroi (74) de guidage.

6. Dispositif (50) de réglage suivant la revendication 5, comprenant un joint (84) d'étanchéité entre la paroi (74) de guidage et la cloison (64) pour rendre étanche l'espace (66) de pression de cylindre de frein par rapport à l'espace (68) de pression de consigne.

7. Dispositif (50) de réglage suivant la revendication 6, dans lequel le joint (84) d'étanchéité est réalisé sous la forme d'un joint à gorge, ayant une lèvre (86) d'étanchéité dirigée dans l'espace (66) de pression de cylindre de frein.

8. Dispositif (50) de réglage suivant l'une des revendications précédentes, comprenant un ressort (76), sur lequel l'élément (70) de séparation est monté axialement dans l'espace (68) de pression de consigne pour donner à l'avance la pression de consigne.

9. Partie (8) principale d'une vanne (2) de soupape pour commander un frein pneumatique par une pression (16) de cylindre de frein, comprenant :
- un dispositif (48) de pilotage pour détecter une différence de pression entre une pression (14) de commande et une pression (26) de référence et
- un dispositif (50) de réglage suivant l'une des revendications précédentes pour régler la pression (66) de cylindre de frein sur une pression de consigne, qui dépend de la différence de pression entre la pression (14) de commande et la pression (26) de référence.

10. Soupape (2) de commande d'un frein pneumatique par une pression (16) de cylindre de frein, reposant sur une pression (18) de conduit principal pouvant être modifiée manuellement, comprenant :
- une partie (12) de conduit pour régler une pression (14) de commande reposant sur la pression (18) de conduit principal et
- une partie (8) principale suivant la revendication (9) pour régler la pression (16) de cylindre de frein, reposant sur la pression (14) de commande.
